# EUROPÄISCHE PATENTSCHRIFT

(11) **EP 4 467 807 B1**
(45) Veröffentlichungstag und Bekanntmachung des Hinweises auf die Patenterteilung: **14.01.2026**
(21) Anmeldenummer: 24175876.2
(22) Anmeldetag: 15.05.2024
(51) Int. Cl.: F03D 17/00, G01P 1/02, G01M 5/00

(54) **VERFAHREN UND SENSORVORRICHTUNG ZUR ERFASSUNG VON SCHWINGUNGEN AUSGEDEHNTER ROTORBLÄTTER VON WINDENERGIEANLAGEN**
METHOD AND SENSOR DEVICE FOR DETECTING OSCILLATIONS OF EXTENDED ROTOR BLADES OF WIND TURBINES
PROCÉDÉ ET DISPOSITIF DE CAPTEUR POUR DÉTECTER DES VIBRATIONS DE PALES DE ROTOR ÉTENDUES D'ÉOLIENNES

(30) Priorität: 22.05.2023 DE 102023113352
(43) Veröffentlichungstag der Anmeldung: 27.11.2024
(73) Patentinhaber: Deutsches Zentrum für Luft- und Raumfahrt e.V., 53227 Bonn (DE)
(72) Erfinder: Govers, Yves, 37073 Göttingen (DE); Böswald, Marc, 37073 Göttingen (DE); Sinske, Julian, 37073 Göttingen (DE); Kober, Philipp, 37073 Göttingen (DE); Soal, Keith, 37073 Göttingen (DE); Thiem, Carsten, 37073 Göttingen (DE); Meier, Tobias, 37073 Göttingen (DE)
(74) Vertreter: REHBERG HÜPPE + PARTNER

(56) Entgegenhaltungen:
- EP-A1- 3 296 715
- WO-A2-2015/126203
- CN-A- 101 818 724
- GB-A- 2 485 595

## Beschreibung

### TECHNISCHES GEBIET DER ERFINDUNG

Die Erfindung bezieht sich auf ein Verfahren zur Erfassung von Schwingungen eines in einer Haupterstreckungsrichtung ausgedehnten Rotorblatts einer Windkraftanlage. Genauer bezieht sich die Erfindung auf ein Verfahren mit den Merkmalen des Oberbegriffs des unabhängigen Patentanspruchs 1. Weiterhin bezieht sich die Erfindung auf eine Sensorvorrichtung zur Durchführung dieses Verfahrens.

### STAND DER TECHNIK

Ein Verfahren mit den Merkmalen des Oberbegriffs des Patentanspruchs 1 geht aus der EP 3 296 715 A1 hervor. Bei diesem Verfahren wird das Rotorblatt an seiner Blattwurzel eingespannt. An dem Rotorblatt werden Beschleunigungssensoren angebracht, die zeitaufgelöst Verlagerungen von verschiedenen Punkten des Rotorblatts erfassen; und das eingespannte Rotorblatt wird in einem Modenscan nacheinander bei einer Vielzahl unterschiedlicher Frequenzen zu Schwingungen angeregt. Während des Modenscans werden die Verlagerungen der Punkte des Rotorblatts mit den Beschleunigungssensoren zeitlich aufgelöst erfasst. Die Beschleunigungssensoren werden über die an die Blattspitze anschließenden äußeren zwei Drittel der Länge des Rotorblatts verteilt angeordnet. Während des Modenscans werden die Beschleunigungssensoren mit einer Abfragefrequenz abgefragt oder ihre Signale werden mit einer Abtastfrequenz abgetastet, die mehr als 2,5-mal so groß wie eine höchste der unterschiedlichen Frequenzen der Anregung oder eine höchste interessierende Eigenfrequenz des Rotorblatts. Aus den erfassten Verlagerungen werden Eigenfrequenzen und Schwingungsform des Rotorblatts nach einer Methode der experimentellen Modalanalyse ermittelt. Wenn Veränderungen der Eigenfrequenzen oder Schwingungsformen festgestellt werden, ist dies ein Indiz dafür, dass sich das Rotorblatt während eines Dauerschwingtests verändert hat, was generell als Auftreten eines Strukturfehlers zu werten ist.

Die Anbringung der Beschleunigungssensoren und zugehöriger Signalübertragungsleitungen an dem Rotorblatt ist aufwändig. Auf einem Prüfstand, wie er bei dem bekannten Verfahren zur Anwendung kommt, mag dieser Aufwand zu vertreten sein. Wenn jedoch die Schwingungsüberwachung eines bereits in einer Windenergieanlage installierten Rotorblatts durchgeführt werden soll, erweist sich die Anbringung einzelner Sensoren und zugehöriger Signalübertragungsleitung als komplexe Aufgabe, zumal die Beschleunigungssensoren und die Signalübertragungsleitungen sowie deren Anbringung an das jeweilige Rotorblatt im Betrieb der Windkraftanlage nicht nur mechanischen Belastungen auf Grund der Schwingungen des Rotorblatts, sondern auch auf Grund der Rotation des Rotorblatts und durch Wettereinflüsse ausgesetzt sind.

Aus der US 2021 / 0 332 760 A1 ist ein flexibles Sensorarraysystem zur prognostizierenden Zustandsüberwachung von Verbundbauteilen in der Luftfahrt bekannt. Das Sensorarraysystem weist eine Haut, ein mechanisches Gitternetzwerk, das an einen Bereich der Haut angekoppelt ist und Knoten an Schnittpunkten von Gitterverbindungen umfasst, und Sensoren an den Knoten des Gitternetzwerks auf. Das Gitternetzwerk ist zwischen zwei Lagen der Haut angeordnet und die Sensoren an den Knoten sind durch das Gitternetzwerk elektrisch miteinander verbunden. Zur Herstellung des Sensorarraysystems wird das Gitternetzwerk auf ein Substrat aufgebracht. Das Substrat kann von einer Rolle kommen und wird im Rahmen der Herstellung des Sensorarraysystems zugeschnitten oder komplett entfernt. Im Einsatz baut das flexible Sensorarraysystem auf den zustandsüberwachten Verbundbauteilen Verbundbauteilen auf, so dass es zur Anbringung auf aerodynamisch wirksamen Flächen nicht geeignet ist.

Aus der JP 2017 - 191 079 A ist eine Schwingungsdetektionsvorrichtung bekannt, bei der mehrere Schwingungssensoren in einem Raster auf einem blattartigen Element aufgebracht sind. Die bekannte Vorrichtung ist zur Erfassung von Schwingungen von Kraftfahrzeugteilen an einer Vielzahl von Orten der Kraftfahrzeugteile vorgesehen.

Aus der JP 2002 - 122 574 A ist ein Schadenerkennungssensor bekannt, der eine Harzschicht aufweist, in der eine Mehrzahl von piezoelektrischen Elementen und Elektroden angeordnet ist. Eine Erregungsspannung wird an eines der piezoelektrischen Elemente angelegt, um eine elastische Welle zu generieren, und die elastische Welle wird mit einem anderen der piezoelektrischen Elemente registriert. Zur Herstellung werden die piezoelektrischen Elemente auf eine Klebstoffschicht auf einer Seite des Harzfilms aufgebracht und dann mit einer Schutzschicht abgedeckt. Die Schutzschicht kann abgezogen werden, um den Schadenerfassungssensor an eine Oberfläche anzukleben.

Aus der DE 10 2016 220 032 A1 ist eine Sensorvorrichtung für ein Kraftfahrzeug mit einem Sensormodul und mit einer mit dem Sensormodul verbundenen Anschlussleitung zum elektrischen Kontaktieren des Sensormoduls bekannt. Die Anschlussleitung ist als Leiterfolie ausgebildet, auf der mehrere unterschiedliche Sensormodule angeordnet und durch jeweils eine oder eine gemeinsame die Leiterfolie zumindest abschnittsweise umfassende Umspritzung eingehaust sind. Die Leiterfolie weist auf einer Seite ein Klebemittel auf, mittels welcher die Leiterfolie auf einfache Art und Weise an einem Karosserieelement befestigbar ist. Dazu weist die Leiterfolie eine Klebeschicht auf, die vor der Montage durch eine abziehbare Schutzschicht überdeckt ist. Die Sensoren der Sensormodule sind als Beschleunigungssensoren ausgebildet und können durch einen Parallel-BUS-Mode, einen Universal-BUS-Mode oder einen Daisy-Chain-BUS-Mode angesteuert werden.

Aus der WO 2015/ 126 203 A2 ist ein Datenerfassungssystem zum Testen von Rotorblättern von Windkraftanlagen bekannt. Die über das jeweilige Rotorblatt verteilt angeordneten Datenaufnehmer können an unterschiedliche parallele oder serielle Kommunikationsverbindungen an eine Schnittstelle angeschlossen sein. Über diese Kommunikationsverbindungen werden die von den Datenaufnehmern erhaltenen Daten übertragen und zeitsynchronisiert.

Aus A. Dementyev et al.: SensorTape: Modular and Programmable 3D-Aware Dense Sensor Network on a Tape, 2015, https://resenv.media.mit.edu/pubs/papers/Sensor_tape_UIST_ 2015.pdf, DOI: http://dx.doi.org/10.1145/2807442.2807507 ist eine flexible Leiterplatte in Form eines langgestreckten Bands bekannt, auf der als mikroelektromechanische Systeme ausgebildete Beschleunigungssensoren, zugehörige Mikroprozessoren und Busleitungen zur Signalübertragung angeordnet sind. Die Beschleunigungssensoren sind in Abständen in der Haupterstreckungsrichtung der flexiblen Leiterplatte von etwa 3 bis 4 cm angeordnet. Eine maximale Länge der flexiblen Leiterplatte soll wegen parasitärer Kapazitäten auf 108 Sensorpunkte bzw. 3,8 m beschränkt sein.

### AUFGABE DER ERFINDUNG

Der Erfindung liegt die Aufgabe zugrunde, ein Verfahren und eine Messvorrichtung zur Erfassung von Schwingungen eines Rotorblatts einer Windenergieanlagen aufzuzeigen, die für die Anwendung an über eine Länge von mindestens 10 m ausgedehnten Rotorblättern geeignet und mit geringem Aufwand an- bzw. verwendbar sind.

### LÖSUNG

Die Aufgabe der Erfindung wird durch ein Verfahren mit den Merkmalen des Patentanspruchs 1, durch eine Sensorvorrichtung mit den Merkmalen des Patentanspruchs 6 und durch eine Windenergieanlage mit den Merkmalen des Patentanspruchs 15 gelöst. In den weiteren Patentansprüchen sind bevorzugte Ausführungsformen des Verfahrens und der Sensorvorrichtung definiert.

### BESCHREIBUNG DER ERFINDUNG

Bei einem Verfahren zur Erfassung von Schwingungen eines in einer Haupterstreckungsrichtung über eine Länge von mindestens 10 m ausgedehnten Rotorblatts einer Windenergieanlage, bei dem in Positionen, die in der Haupterstreckungsrichtung voneinander beabstandet sind, Beschleunigungssensoren an den Rotorblatt angebracht werden, wobei die Positionen über mindestens 90 % der Länge verteilt werden, bei dem die Beschleunigungssensoren über Signalübertragungsleitungen an eine gemeinsame Signalerfassungseinheit angeschlossen werden und bei dem über die Signalübertragungsleitungen Beschleunigungssignale der Beschleunigungssensoren an die gemeinsame Signalerfassungseinheit übertragen werden, um sie hinsichtlich der zu erfassenden Schwingungen auszuwerten, wird erfindungsgemäß ein gemeinsames Trägerband, in das die als mikroelektromechanische Systeme (MEMS) ausgebildeten Beschleunigungssensoren zusammen mit Mikroprozessoren und den Signalübertragungsleitungen eingebracht sind und das eine äußere Schutzschicht aufweist, derart an eine in der Haupterstreckungsrichtung verlaufende Oberfläche des Rotorblatts angeklebt, dass die Schutzschicht die Beschleunigungssensoren, die Mikroprozessoren und die Signalübertragungsleitungen nach außen hin abdeckt.

Die Beschleunigungssensoren sind als einfache und kostengünstige MEMS ausgebildet. Ihnen sind Mikroprozessoren zum Auslesen der MEMS und zur Übermittlung daraus resultierender Beschleunigungssignale über die Signalübertragungsleitungen zugeordnet. Insbesondere können die Signalübertragungsleitungen einen Datenbus ausbilden, über den eine große Anzahl von Mikroprozessoren mit der gemeinsamen Signalerfassungseinheit kommunizieren kann. Auch eine solche große Anzahl von Mikroprozessoren und darüber angeschlossenen Beschleunigungssensoren kann bei dem erfindungsgemäßen Verfahren mittels des gemeinsamen Trägerbands auf sehr einfache Weise an dem Rotorblatt in definierten Positionen angebracht werden, indem das Trägerband an die in der Haupterstreckungsrichtung verlaufende Oberfläche des Rotorblatts angeklebt wird. Zudem werden die Beschleunigungssensoren, die Mikroprozessoren und die Signalübertragungsleitung durch die Schutzschicht des gemeinsamen Trägerbands nach außen hin abgedeckt. Dadurch werden sie nicht nur gegen Einflüsse von außen geschützt, sondern auch sehr viel besser mechanisch an dem ausgedehnten balkenartigen System fixiert als wenn sie nur einzeln und entsprechend über eine geringere Kontaktfläche angeklebt würden. Grundsätzlich kann die Schutzschicht ein separater Bestandteil des Trägerbands sein, der im letzten Schritt des Anbringens der Beschleunigungssensoren, der Mikroprozessoren und der Signalübertragungsleitungen separat aufgeklebt wird, um die Beschleunigungssensoren, die Mikroprozessoren und die Signalübertragungsleitungen nach außen hin abzudecken. Es ist jedoch bevorzugt, dass die äußere Schutzschicht ein integraler Bestandteil des Trägerbands ist, sodass der gesamte Anbringungsprozess für die Beschleunigungssensoren, die Mikroprozessoren und Signalübertragungsleitungen ausschließlich in dem Ankleben des gemeinsamen Trägerbands an die Oberfläche des Rotorblatts besteht. Dies schließt jedoch nicht aus, dass anschließend noch eine zusätzliche, möglicher Weise breitere Schutzschicht, die sich seitlich über das Trägerband hinweg erstreckt oben auf das Trägerband und die angrenzende Oberfläche des Rotorblatts aufgeklebt wird. Auch dann baut das Trägerband nicht stark auf dem Rotorblatt auf und behindert dessen aerodynamische Wirksamkeit zumindest nicht in relevantem Umfang.

Das Rotorblatt kann während der Übertragung der Beschleunigungssignale um eine Rotationsachse rotieren. Durch die großflächige Kontaktfläche des Trägerbands zu der Oberfläche des Rotorblatts werden die Beschleunigungssensoren auch von den im Bereich der Blattspitzen langer Rotorblätter von Windenergieanlagen auftretenden hohen Fliehkräfte nicht abgelöst. Es versteht sich aber, dass dies die Verwendung eines Klebstoffs mit hoher Haftkraft beim Ankleben des Trägerbands an die Oberfläche des Rotorblatts voraussetzt.

Die Positionen, in denen die Beschleunigungssensoren an dem Rotorblatt angebracht werden, sind vorzugsweise über mindestens 75 % dessen Länge noch mehr bevorzugt über mindestens 90 % dessen Länge, also über seine gesamte wesentliche Länge verteilt. Weiterhin können die Positionen in der Haupterstreckungsrichtung zwischen 1/120 und 1/6 und vorzugsweise zwischen 1/60 und 1/8 der Länge des Rotorblatts in der Haupterstreckungsrichtung voneinander beabstandet werden. Um die interessierenden Schwingungen des Rotorblatts vollständig zu erfassen, ist eine gewisse Mindestdichte der Positionen der Beschleunigungssensoren erforderlich. Diese liegt bei etwa acht über Länge des Rotorblatts gleichmäßig verteilten Beschleunigungssensoren. Mit zusätzlichen Beschleunigungssensoren können zusätzliche Details der Schwingungen erfasst werden. Eine sehr große Anzahl von sehr dicht angeordneten Beschleunigungssensoren liefert in der Regel jedoch keine wertvollen Zusatzinformationen.

Die einzelnen Beschleunigungssensoren sind so auszulegen, dass sie die Beschleunigungen des Rotorblatts zumindest in einer und vorzugsweise in zwei linear voneinander unabhängigen Richtungen quer zu seiner Haupterstreckungsrichtung derart zu erfassen, dass sie in allen quer zu seiner Haupterstreckungsrichtung verlaufenden Richtungen erfasst werden. Zusätzlich können die Beschleunigungssensoren Beschleunigungen in der Haupterstreckungsrichtung erfassen. Diese Beschleunigungen können bei einem rotierenden Rotorblatt durch auftretende Zentripetalbeschleunigungen dominiert werden. Aus Schwingungen resultierende Beschleunigungskomponenten lassen sich jedoch anhand Ihres zeitlichen Verlaufs extrahieren.

Vorzugsweise werden die Schwingungen aller Rotorblätter der Windenergieanlage auf die gleiche Weise erfasst, das heißt jeweils mit Hilfe eines Trägerbands, das an eine in der Haupterstreckungsrichtung des jeweiligen Rotorblatts verlaufende Oberfläche angeklebt wird. Durch die Erfassung der Schwingungen aller Rotorblätter der Windenergieanlage können auch Schwingungen des gesamten Rotors der Windkraftanlage abhängig von dessen aktueller Drehstellung um die Rotationsachse erfasst werden.

Eine Sensorvorrichtung zur Durchführung des erfindungsgemäßen Verfahrens an einem Rotorblatt einer Windenergieanlage weist ein langgestrecktes flexibles Trägerband, in das Trägerband eingebrachte, als mikroelektromechanische Systeme (MEMS) ausgebildete Beschleunigungssensoren, Mikroprozessoren und Signalübertragungsleitungen und einen an einem Ende des Trägerbands angebrachten oder anbringbaren Anschlussstecker auf, um die Signalübertragungsleitungen an eine gemeinsame Signalerfassungseinheit anzuschließen. Das Trägerband umfasst eine Schutzschicht, die die Beschleunigungssensoren, die Mikroprozessoren und die Signalübertragungsleitungen zumindest auf einer Hauptseite der Sensorvorrichtung nach außen hin abdeckt. Damit ist das Trägerband derart an eine in der Haupterstreckungsrichtung verlaufende Oberfläche des Rotorblatts anklebbar ist, dass die Schutzschicht die Beschleunigungssensoren, die Mikroprozessoren und die Signalübertragungsleitungen an dem Rotorblatt nach außen hin abdeckt. Weiterhin versteht es sich, dass das Trägerband länger als 6 m ist, über die die Beschleunigungssensoren längs des Trägerbands mindestens verteilt sind, um das erfindungsgemäße Verfahren ausführen zu können. Von den aus A. Dementyev et al., 2015, bekannten SensorTape unterscheidet sich die erfindungsgemäße Sensorvorrichtung daher sowohl durch eine größere Länge als auch durch die zusätzliche Schutzschicht.

Hinzukommen kann, dass das Trägerband einen durchgehenden Klebestreifen umfasst, so dass das Trägerband ein selbstklebendes Trägerband ist, welches besonders einfach an die Oberfläche des Rotorblatts angeklebt werden kann.

Auch dass die Beschleunigungssensoren in der Regel in Abständen von 1 dm bis 15 m und vorzugsweise von 2 dm bis 10 m längs des Trägerbands verteilt angeordnet sind, unterscheidet die erfindungsgemäße Sensorvorrichtung von dem Stand der Technik SensorTape. Verglichen mit diesem Stand der Technik sind die Beschleunigungssensoren ungewöhnlich weit voneinander beabstandet, um mit einer begrenzten Anzahl von Beschleunigungssensoren die Schwingungen eines sehr stark ausgedehnten Rotorblatts erfassen zu können.

Die Beschleunigungssensoren der erfindungsgemäßen Sensorvorrichtung sind vorzugsweise durch über eine oder mehrere der Signalübertragungsleitungen von der Signalerfassungseinheit übertragbares Triggersignal synchronisierbar, um die Beschleunigungssignale von den einzelnen Beschleunigungssensoren zur jeweils selben Phasenlage auszulesen. Wie aus dem Stand der Technik bekannt muss das Ablesen mit einer Frequenz erfolgen, die zumindest das 2,55-fache der maximalen Frequenz beträgt, bei der die zu erfassende Schwingungen auftreten.

Wie bereits im Zusammenhang mit dem erfindungsgemäßen Verfahren angesprochen wurde, können die Signalübertragungsleitungen Busleitungen sein, an die mehrere oder auch alle der Beschleunigungssensoren über die Mikroprozessoren angeschlossen sind. Dabei können diese Busleitungen auch zum Übertragen des Triggersignals verwendet werden. Ebenso ist es möglich, eine separate Signalübertragungsleitung nur zur Übertragung dieses Triggersignals vorzusehen.

Die Signalübertragungsleitungen können bei der erfindungsgemäßen Sensorvorrichtung zumindest in längs des Trägerbands verteilten Bereichen in längs der Haupterstreckungsebene des Trägerbands orientierten Querwellen verlaufen. Die Signalübertragungsleitungen sind dann als solche länger als der entsprechende Bereich des Trägerbands. Dies erlaubt eine Dehnung des Trägerbands, ohne dass zwangsläufig auch eine Dehnung der Signalübertragungsleitungen oder der Aufbau einer Längsspannung in den Signalübertragungsleitungen erfolgt, welche zu einem Reißen der Signalübertragungsleitungen oder einem Abreißen der Signalübertragungsleitungen von den Mikroprozessoren oder dem Anschlussstecker führen könnte. Dehnungen des Trägerbands können nicht nur beim Aufkleben des Trägerbands auf die Oberfläche des Rotorblatts auftreten, wobei sie durch eine saubere Verfahrensführung zumindest begrenzt werden können. Erhebliche Dehnungen des Trägerbands können auch aufgrund von Komponenten der zu erfassenden Schwingungen in der Haupterstreckungsrichtung des Rotorblatts erfolgen. Insbesondere sind es dynamische Dehnungen, die die in das Trägerband eingebrachten Signalübertragungsleitungen sehr schnell überbeanspruchen können, wenn keine Gegenmaßnahmen wie der vorgeschlagene Verlauf der Signalübertragungsleitungen in Querwellen vorgesehen werden.

Vorzugsweise umschließt das Trägerband die Beschleunigungssensoren, die Mikroprozessoren und die Signalübertragungsleitungen wasserdicht, so dass alle elektrischen und elektronischen Komponenten der Sensorvorrichtung vor einer Einwirkung von Wasser geschützt sind. Die wasserdichte Umschließung kann insbesondere durch die Schutzschicht und den Klebestreifen des Trägerbands bewirkt werden. Daneben kann eine zusätzliche wasserdichte Umschließung innerhalb des Trägerbands ausgebildet sein.

Bei der erfindungsgemäßen Sensorvorrichtung können die Signalübertragungsleitungen über den Anschlussstecker an die gemeinsame Signalerfassungseinheit angeschlossen sein, und die Signalerfassungseinheit kann ein Mikrocomputer zur Auswertung von über die Signalübertragungsleitung übermittelten Beschleunigungssignalen sein. Die Sensorvorrichtung einschließlich der Signalerfassungseinheit kann dann bereits aufbereitete Daten zu den zu erfassenden Schwingungen nach extern ausgeben.

Für den Einsatz der erfindungsgemäßen Sensorvorrichtung an Rotorblättern einer Windenergieanlage kann die Signalerfassungseinheit einen Energiespeicher und/oder Generator zur Energieversorgung sowie eine Schnittstelle zur drahtlosen Übermittlung von Ergebnissen ihrer Auswertung aufweisen. Die Signalerfassungseinheit kann dann zusammen mit dem Trägerstreifen fest an dem jeweiligen Rotorblatt montiert werden, um als autarke Einheit mit dem Rotorblatt zu rotieren, die die Ergebnisse ihrer Auswertung, das heißt die interessierenden Schwingungen drahtlos nach extern übermittelt. Zur Energieversorgung der Signalerfassungseinheit und gegebenenfalls von dort aus auch der Mikroprozessoren der Sensorvorrichtung kann neben einem Energiespeicher ein Generator, insbesondere ein Solargenerator vorgesehen sein.

Bei einer erfindungsgemäßen Windenergieanlage mit einer erfindungsgemäßen Sensorvorrichtung ist an jedes Rotorblatt der Windenergieanlage das oder ein gleiches Trägerband derart an die oder eine in der Haupterstreckungsrichtung verlaufende Oberfläche des jeweiligen Rotorblatts angeklebt ist, dass die Schutzschicht des Trägerbands die Beschleunigungssensoren, die Mikroprozessoren und die Signalübertragungsleitungen nach außen hin abdeckt

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Anschlussstecker die Rede ist, ist dies so zu verstehen, dass genau ein Anschlussstecker, zwei Anschlussstecker oder mehr Anschlussstecker vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine im Rahmen der Durchführung des erfindungsgemäßen Verfahrens an einer Hinterkante eines Rotorblatts einer Windenergieanlage angebrachte erfindungsgemäße Sensorvorrichtung in einer Draufsicht auf das Rotorblatt.
- **Fig. 2**: ist ein Schnitt durch die erfindungsgemäße Sensorvorrichtung im Bereich eines Beschleunigungssensors in gegenüber Fig. 1 vergrößertem Maßstab.
- **Fig. 3**: zeigt die Sensorvorrichtung in einer Draufsicht ohne eine Schutzschicht ihres Trägerbands, ebenfalls im Bereich eines Beschleunigungssensors und in vergrößertem Maßstab.
- **Fig. 4**: zeigt die Sensorvorrichtung in einem Bereich zwischen benachbarten Beschleunigungssensoren in einer ansonsten Fig. 3 entsprechenden Draufsicht;
- **Fig. 5**: ist ein Ablaufdiagramm des erfindungsgemäßen Verfahrens.

### FIGUREN BESCHREIBUNG

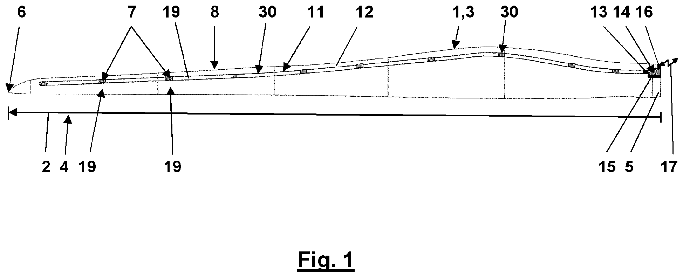

**Fig. 1** zeigt ein Rotorblatt 1 einer ansonsten nicht weiter dargestellten Windenergieanlage. Das Rotorblatt ist ein in einer Haupterstreckungsrichtung 2 ausgedehntes balkenartiges System 3. Das Rotorblatt 1 weist in der Haupterstreckungsrichtung 2 eine Länge 4 von mehreren 10 m zwischen seiner Blattwurzel 5 und seiner Blattspitze 6 auf. In über mehr als 90 % der Länge 4 verteilten Positionen 29 sind Beschleunigungssensoren 7 einer Sensorvorrichtung 30 an dem Rotorblatt 1 angebracht, und zwar längs seiner Hinterkante 8. Konkret handelt es sich hier um zehn Beschleunigungssensoren 7. Die Beschleunigungssensoren 7 sind zusammen mit diesen zugeordneten Mikroprozessoren 9 und einen Datenbus ausbildenden Signalübertragungsleitungen 10 der Sensorvorrichtung 30 durch Aufkleben eines Trägerbands 11 auf eine Oberfläche 12 des Rotorblatts 1 angebracht. Dabei baut das Trägerband 11 mit den eingebrachten Beschleunigungssensoren 7, den Mikroprozessoren 9 und den Signalübertragungsleitungen 10 der Sensorvorrichtung 30 nur wenig über der Oberfläche 12 auf und stört daher die Umströmung des Rotorblatts 1 allenfalls wenig. An dem blattwurzelseitigen Ende des Trägerbands 11 ist ein Anschlussstecker 13 angebracht, über den die Signalübertragungsleitungen 10 an eine Signalerfassungseinheit 14 der Sensorvorrichtung 30 angeschlossen sind. Die Signalerfassungseinheit 14 ist an der Blattwurzel 5 angebracht und kann dort ebenfalls aufgeklebt sein. Die Signalerfassungseinheit 14 verfügt über einen Energiespeicher 15 und eine Schnittstelle 16. Die Schnittstelle 16 ist zur drahtlosen Kommunikation 17 der Signalerfassungseinheit 14 nach extern ausgebildet.

Die Beschleunigungssensoren 7 sind MEMS-Systeme, das heißt es handelt sich um mikroelektromechanische Systeme. Jeder Beschleunigungssensor kann mehrere Teilsysteme umfassen, die jeweils einer der drei Raumrichtungen entsprechen. Die Raumrichtungen können auf das Trägerband 11 bezogen sein und beispielsweise einmal in Richtung der Flächennormalen zur Haupterstreckungsebene des Trägerbands 11, einmal längs des Trägerbands 11 und einmal quer dazu innerhalb der Haupterstreckungsebene des Trägerbands 11 verlaufen.

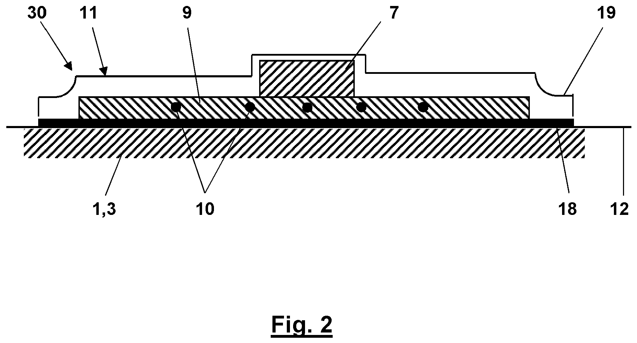

Der Querschnitt gemäß **Fig. 2** zeigt stark schematisch, dass jeder Beschleunigungssensor 7 und der zugeordnete Mikroprozessor 9 ebenso wie die Signalübertragungsleitungen 10 zwischen einem Klebeband 18 und einer Schutzschicht 19 des Trägerbands 11 angeordnet sind. Dabei kann die durchlaufende Struktur des flexiblen Trägerbands 11 weitere Schichten umfassen. Über das Klebeband 18 ist das Trägerband 11 an die Oberfläche 12 angeklebt, und die Schutzschicht deckt die Beschleunigungssensoren 7, die Mikroprozessoren 9 und die Signalübertragungsleitungen 10 sowie die überstehenden Bereiche des Klebebands 18 nach außen hin ab.

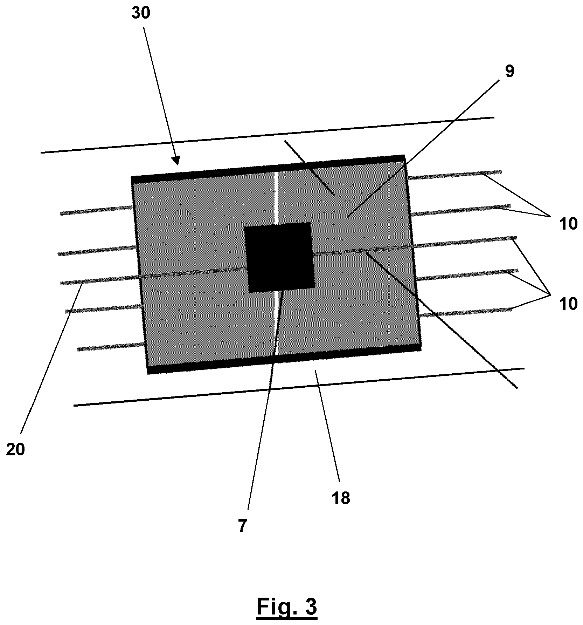

**Fig. 3** illustriert, dass die Beschleunigungssensoren 7 mit Hilfe der Signalübertragungsleitungen 10 synchronisiert werden. Konkret ist eine der Signalübertragungsleitungen 10 so dargestellt, dass sie direkt an den wiedergegebenen Beschleunigungssensor 7 angeschlossen ist, um eine Signalübertragungsleitung 20 auszubilden. Entscheidend ist jedoch, dass über die Signalübertragungsleitungen 10 vorgegeben wird, welchem Zeitpunkt die mit den Beschleunigungssensoren 7 erfassten Beschleunigungen entsprechen, die mit den Beschleunigungssignalen beschrieben werden, welche die Mikroprozessoren 9 über die Signalübertragungsleitungen 10 an die Signalauswerteeinrichtung 14 übermitteln. Wichtig ist, dass diese Zeitpunkte für alle Beschleunigungssensoren 7 gleich sind.

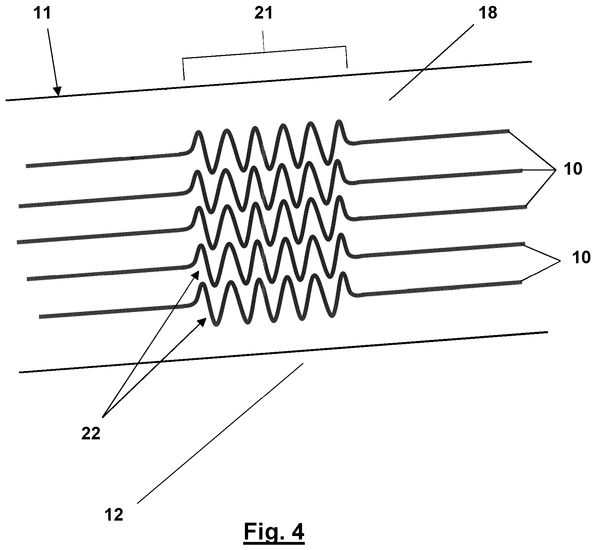

**Fig. 4** zeigt, dass die Signalübertragungsleitungen 10 in längs des Trägerbands 11 verteilten Bereichen 21 in längs der Haupterstreckungsebene des Trägerbands verlaufenden Querwellen 22 verlaufen. Dadurch kann sich das Trägerband 11 infolge von Schwingungen des Rotorblatts 1 elastisch dehnen, ohne dass die Signalübertragungsleitungen 10 reißen oder von den Mikroprozessoren 8 oder Signalerfassungseinheit 14 abreißen.

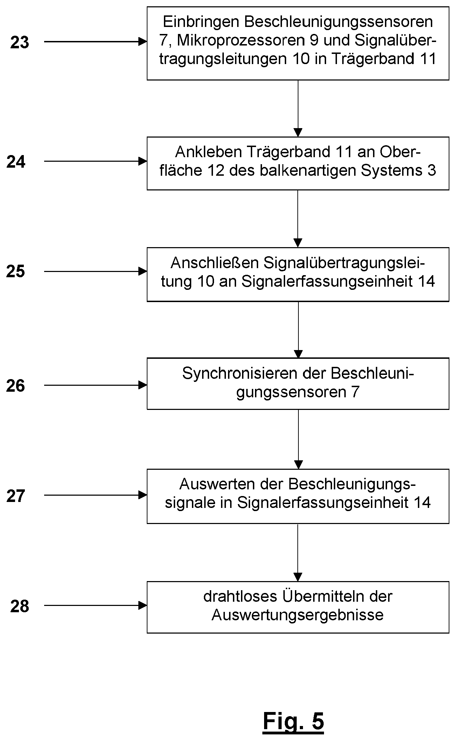

Das in **Fig. 5** illustrierte erfindungsgemäße Verfahren beginnt mit einem Schritt 23 des Einbringens der Beschleunigungssensoren 8 der Mikroprozessoren 9 und der Signalübertragungsleitungen 10 in das Trägerband 11. In einem folgenden Schritt 24 wird das Trägerband 11 an die Oberfläche 12 des Rotorblatts 1 angeklebt. Vor oder nach dem Schritt 24 erfolgt ein Schritt 25 des Anschließens der Signalübertragungsleitungen 10 an die Signalerfassungseinheit 14. In einem Schritt 26 erfolgt ein Synchronisieren der Beschleunigungssensoren 7 bzw. der Beschleunigungen, die von den einzelnen Beschleunigungssensoren 7 gemessen und dann in Form der Beschleunigungssignale über die Signalübertragungsleitungen 10 an die Signalerfassungseinrichtung 14 übertragen werden. In einem Schritt 27 werden die Beschleunigungssignale in der Signalerfassungseinheit 14 ausgewertet. In einem Schritt 28 erfolgt eine drahtlose Übermittlung der Auswertungsergebnisse an eine externe Einheit, die nicht mit dem Rotorblatt 1 um eine Rotorachse der Windenergieanlage umläuft.

Die Auswertung der Beschleunigungssignale von den einzelnen Beschleunigungssensoren erfolgt in der Auswerteeinrichtung 14 abhängig von den Positionen 29, in denen die Beschleunigungssensoren 7 an dem Rotorblatt 1 angebracht sind. Die dafür angewandten Algorithmen sind dem Fachmann grundsätzlich bekannt.

### BEZUGSZEICHENLISTE

- 1: Rotorblatt
- 2: Haupterstreckungsrichtung
- 3: balkenartiges System
- 4: Länge
- 5: Blattwurzel
- 6: Blattspitze
- 7: Beschleunigungssensor
- 8: Hinterkante
- 9: Mikroprozessor
- 10: Signalübertragungsleitung
- 11: Trägerband
- 12: Oberfläche
- 13: Anschlussstecker
- 14: Signalerfassungseinrichtung
- 15: Energiespeicher
- 16: Schnittstelle
- 17: drahtlose Kommunikation
- 18: Klebeband
- 19: Schutzschicht
- 20: Triggersignalleitung
- 21: Bereich
- 22: Querwelle
- 23: Schritt Einbringen
- 24: Schritt Ankleben
- 25: Schritt Anschließen
- 26: Schritt Synchronisieren
- 27: Schritt Auswerten
- 28: Schritt Übermitteln
- 29: Position
- 30: Sensorvorrichtung

## Patentansprüche

1. Verfahren zur Erfassung von Schwingungen eines in einer Haupterstreckungsrichtung (2) über eine Länge (4) von mindestens 10 m ausgedehnten Rotorblatts (1) einer Windenergieanlage,
- wobei in Positionen (29), die in der Haupterstreckungsrichtung (2) voneinander beabstandet sind, Beschleunigungssensoren (7) an dem Rotorblatt (1) angebracht werden, wobei die Positionen (29) über mindestes 60 % der Länge (4) verteilt werden,
- wobei die Beschleunigungssensoren (7) über Signalübertragungsleitungen (10) an eine gemeinsame Signalerfassungseinheit (14) angeschlossen werden und
- wobei über die Signalübertragungsleitungen (10) Beschleunigungssignale der Beschleunigungssensoren (7) an die gemeinsame Signalerfassungseinheit (14) übertragen werden, um sie hinsichtlich der zu erfassenden Schwingungen auszuwerten,
**dadurch gekennzeichnet,**
- **dass** ein gemeinsames Trägerband (11), in das die als mikroelektromechanische Systeme (MEMS) ausgebildeten Beschleunigungssensoren (7) zusammen mit Mikroprozessoren (9) und den Signalübertragungsleitungen (10) eingebracht sind und das eine äußere Schutzschicht (19) aufweist, derart an eine in der Haupterstreckungsrichtung (2) verlaufende Oberfläche des Rotorblatts (1) angeklebt wird, dass die Schutzschicht (19) die Beschleunigungssensoren (7), die Mikroprozessoren (9) und die Signalübertragungsleitungen (10) nach außen hin abdeckt.

2. Verfahren nach Anspruch 1, **wobei** das Rotorblatt (1) während der Übertragung der Beschleunigungssignale um eine Rotationsachse rotiert.

3. Verfahren nach Anspruch 1 oder 2, **wobei** die Positionen (29) über mindestes 75 % der Länge (4) und vorzugsweise über mindestes 90 % der Länge (4) verteilt werden.

4. Verfahren nach einem der vorhergehenden Ansprüche, **wobei** die Positionen (29) in der Haupterstreckungsrichtung (2) zwischen 1/120 und 1/6 und vorzugsweise zwischen 1/60 und 1/8 der Länge (4) voneinander beabstandet werden.

5. Verfahren nach einem der vorhergehenden Ansprüche, **wobei** Schwingungen aller Rotorblätter (1) der Windenergieanlage auf die gleiche Weise erfasst werden.

6. Sensorvorrichtung (30) zur Durchführung des Verfahrens nach einem der vorhergehenden Ansprüche an einem Rotorblatt (1) einer Windenergieanlage, mit
- einem langgestreckten flexiblen Trägerband (11),
- in das Trägerband (11) eingebrachten als mikroelektromechanische Systeme (MEMS) ausgebildeten Beschleunigungssensoren (7), Mikroprozessoren (9) und Signalübertragungsleitungen (10) und
- einem an einem Ende des Trägerbands (11) angebrachten oder anbringbaren Anschlussstecker (13), um die Signalübertragungsleitungen (10) an eine gemeinsame Signalerfassungseinheit (14) anzuschließen,
**wobei** das Trägerband (11) eine Länge (4) von mehr als 6 m aufweist, eine Schutzschicht (19) umfasst und derart an eine in der Haupterstreckungsrichtung (2) verlaufende Oberfläche des Rotorblatts (1) anklebbar ist, dass die Schutzschicht (19) die Beschleunigungssensoren (7), die Mikroprozessoren (9) und die Signalübertragungsleitungen (10) nach außen hin abdeckt.

7. Sensorvorrichtung nach Anspruch 6, **wobei** das Trägerband (11) einen durchgehenden Klebestreifen umfasst.

8. Sensorvorrichtung (30) nach Anspruch 6 oder 7, **wobei** die Beschleunigungssensoren (7) in Abständen von 1 dm bis 15 m und vorzugsweise von 2 dm bis 10 m längs des Trägerbands (11) verteilt angeordnet sind.

9. Sensorvorrichtung (30) nach einem der Ansprüche 6 bis 8, **wobei** die Beschleunigungssensoren (7) durch ein über eine oder mehrere der Signalübertragungsleitungen (10) von der Signalerfassungseinheit (14) übertragbares Triggersignal synchronisierbar sind.

10. Sensorvorrichtung (30) nach einem der Ansprüche 6 bis 9, **wobei** die Signalübertragungsleitungen (10) Busleitungen sind, an die mehrere oder alle der Beschleunigungssensoren (7) über die Mikroprozessoren (9) angeschlossen sind.

11. Sensorvorrichtung (30) nach einem der Ansprüche 6 bis 10, **wobei** die Signalübertragungsleitungen (10) zumindest in längs des Trägerbands (11) verteilten Bereichen (21) in längs der Haupterstreckungsebene des Trägerbands (11) orientierten Querwellen (22) verlaufen.

12. Sensorvorrichtung (30) nach einem der Ansprüche 6 bis 11, **wobei** das Trägerband (11) die Beschleunigungssensoren (7), die Mikroprozessoren (9) und die Signalübertragungsleitungen (10) wasserdicht umschließt.

13. Sensorvorrichtung (30) nach einem der Ansprüche 6 bis 12,
**wobei** die Signalübertragungsleitungen (10) über den Anschlussstecker an die gemeinsame Signalerfassungseinheit (14) angeschlossen sind und
wobei die Signalerfassungseinheit (14) ein Mikrocomputer zur Auswertung von über die Signalübertragungsleitungen (10) übermittelten Beschleunigungssignalen ist.

14. Sensorvorrichtung (30) nach Anspruch 13,
**wobei** die Signalerfassungseinheit (14) einen Energiespeicher und/oder einen Generator zur Energieversorgung aufweist und
wobei die Signalerfassungseinheit (14) eine Schnittstelle zur drahtlosen Übermittlung von Ergebnissen der Auswertung aufweist.

15. Windenergieanlage mit einer Sensorvorrichtung (30) nach einem der Ansprüche 6 bis 14, **wobei** an jedes Rotorblatt (1) der Windenergieanlage das oder ein gleiches Trägerband (11) derart an die oder eine in der Haupterstreckungsrichtung (2) verlaufende Oberfläche des Rotorblatts (1) angeklebt ist, dass die Schutzschicht (19) die Beschleunigungssensoren (7), die Mikroprozessoren (9) und die Signalübertragungsleitungen (10) nach außen hin abdeckt.

## Claims

1. Method of detecting vibrations of a rotor blade (1) of a wind power plant, the rotor blade (1) extending in a main extension direction (2) over a length (4) of at least 10 m,
- wherein acceleration sensors (7) are mounted on the rotor blade (1) at positions (29) that are spaced apart from one another in the main extension direction (2), the positions (29) being distributed over at least 60% of the length (4),
- wherein the acceleration sensors (7) are connected to a common signal acquisition unit (14) via signal transmission lines (10), and
- wherein acceleration signals of the acceleration sensors (7) are transmitted to the common signal acquisition unit (14) via the signal transmission lines (10) in order to evaluate them with respect to the vibrations to be detected,
**characterized in**
- **that** a common carrier tape (11), into which the acceleration sensors (7) designed as microelectromechanical systems (MEMS) together with microprocessors (9) and the signal transmission lines (10) are embedded and which has an outer protective layer (19), is adhered to a surface of the rotor blade (1) extending in the main extension direction (2) such that the protective layer (19) covers the acceleration sensors (7), the microprocessors (9) and the signal transmission lines (10) towards the outside.

2. Method of claim 1, **wherein** the rotor blade (1) rotates about a rotational axis during the transmission of the acceleration signals.

3. Method of claim 1 or 2, **wherein** the positions (29) are distributed over at least 75% of the length (4), and preferably over at least 90% of the length (4).

4. Method of any of the preceding claims, **wherein** the positions (29) are spaced apart from one another in the main extension direction (2) by between 1/120 and 1/6 of the length (4), and preferably by between 1/60 and 1/8 of the length (4).

5. Method of any of the preceding claims, **wherein** vibrations of all rotor blades (1) of the wind power plant are detected in the same manner.

6. A sensor device (30) for carrying out the method of any of the preceding claims on a rotor blade (1) of a wind power plant, comprising
- an elongated flexible carrier tape (11),
- acceleration sensors (7) designed as microelectromechanical systems (MEMS), microprocessors (9) and signal transmission lines (10) embedded into the carrier tape (11), and
- a connector plug (13) arranged or arrangeable at one end of the carrier tape (11) in order to connect the signal transmission lines (10) to a common signal acquisition unit (14),
**wherein** the carrier tape (11) has a length (4) of more than 6 m, comprises a protective layer (19), and is attachable to a surface of the rotor blade (1) extending in the main extension direction (2) such that the protective layer (19) covers the acceleration sensors (7), the microprocessors (9) and the signal transmission lines (10) towards the outside.

7. Sensor device of claim 6, **wherein** the carrier tape (11) comprises a continuous adhesive strip.

8. Sensor device (30) of claim 6 or 7, **wherein** the acceleration sensors (7) are arranged distributed along the carrier tape (11) at spacings from 1 dm to 15 m, and preferably from 2 dm to 10 m.

9. Sensor device (30) of any of the claims 6 to 8, **wherein** the acceleration sensors (7) are synchronizable by a trigger signal transmittable from the signal acquisition unit (14) via one or more of the signal transmission lines (10).

10. Sensor device (30) of any of the claims 6 to 9, **wherein** the signal transmission lines (10) are bus lines to which several or all of the acceleration sensors (7) are connected via the microprocessors (9).

11. Sensor device (30) of any of the claims 6 to 10, **wherein** the signal transmission lines (10) run in transverse waves (22) oriented in the plane of main extension of the carrier tape (11) at least in regions (21) distributed along the carrier tape (11).

12. Sensor device (30) of any of the claims 6 to 11, **wherein** the carrier tape (11) encloses the acceleration sensors (7), the microprocessors (9) and the signal transmission lines (10) in a waterproof manner.

13. Sensor device (30) of any of the claims 6 to 12,
**wherein** the signal transmission lines (10) are connected to the common signal acquisition unit (14) via the connector plug, and
wherein the signal acquisition unit (14) is a microcomputer for evaluating acceleration signals transmitted via the signal transmission lines (10).

14. Sensor device (30) of claim 13,
**wherein** the signal acquisition unit (14) comprises an energy store and/or a generator for the energy supply, and
wherein the signal acquisition unit (14) comprises an interface for wireless transmission of results of the evaluation.

15. Wind power plant turbine comprising a sensor device (30) of any of the claims 6 to 14, **wherein** the or a same carrier tape (11) is adhered to each rotor blade (1) of the wind turbine on the or a surface of the rotor blade (1) extending in the main extension direction (2) such that the protective layer (19) covers the acceleration sensors (7), the microprocessors (9) and the signal transmission lines (10) towards the outside.

## Revendications

1. Procédé pour détecter les vibrations d'une pale de rotor (1) d'une éolienne, s'étendant dans une direction d'extension principale (2) sur une longueur (4) d'au moins 10 m,
- les capteurs d'accélération (7) étant montés sur la pale de rotor (1) dans des positions (29) espacées les unes des autres dans la direction d'extension principale d'extension (2), les positions (29) étant réparties sur au moins 60 % de la longueur (4)
- les capteurs d'accélération (7) étant raccordés à une unité commune de détection de signaux (14) par des lignes de transmission de signaux (10) et
- les signaux d'accélération des capteurs d'accélération (7) étant transmis à l'unité commune de détection de signaux (14) via les lignes de transmission de signaux (10) afin de permettre l'évaluation en fonction des vibrations à détecter,
**caractérisé en ce**
- une bande de support commune (11) dans laquelle sont intégrés les capteurs d'accélération (7) conçus comme des systèmes microélectromécaniques (MEMS) ainsi que des microprocesseurs (9) et les lignes de transmission de signaux (10), et qui présente une couche de protection extérieure (19), est collée sur une surface de la pale de rotor (1) s'étendant dans la direction d'extension principale (2) de telle sorte que la couche de protection (19) recouvre les capteurs d'accélération (7), les microprocesseurs (9) et les lignes de transmission de signaux (10) vers l'extérieur.

2. Procédé selon la revendication 1, **dans lequel** la pale de rotor (1) tourne autour d'un axe de rotation pendant la transmission des signaux d'accélération.

3. Procédé selon la revendication 1 ou 2, **dans lequel** les positions (29) sont réparties sur au moins 75 % de la longueur (4) et, de préférence, sur au moins 90 % de la longueur (4).

4. Procédé selon l'une des revendications précédentes, **dans lequel** les positions (29) sont espacées les unes des autres dans la direction d'extension principale (2) entre 1/120 et 1/6 et, de préférence, entre 1/60 et 1/8 de la longueur (4).

5. Procédé selon l'une des revendications précédentes, **dans lequel** les vibrations de toutes les pales de rotor (1) de l'éolienne sont détectées de la même manière.

6. Dispositif capteur (30) pour la mise en œuvre du procédé selon l'une des revendications précédentes sur une pale de rotor (1) d'une éolienne, comprenant
- une bande de support flexible allongée (11),
- des capteurs d'accélération (7) conçus comme des systèmes microélectromécaniques (MEMS) intégrés dans la bande de support (11), des microprocesseurs (9) et des lignes de transmission de signaux (10), et
- un connecteur (13) fixé ou pouvant être fixé à une extrémité de la bande de support (11) afin de raccorder les lignes de transmission de signaux (10) à une unité commune de détection de signaux (14),
la bande de support (11) présentant une longueur (4) supérieure à 6 m, comprenant une couche de protection (19) et pouvant être collée sur une surface de la pale de rotor (1) s'étendant dans la direction d'extension principale (2) de telle sorte que la couche de protection (19) recouvre les capteurs d'accélération (7), les microprocesseurs (9) et les lignes de transmission de signaux (10) vers l'extérieur.

7. Dispositif capteur selon la revendication 6, la bande de support (11) comprenant une bande adhésive continue.

8. Dispositif capteur (30) selon la revendication 6 ou 7, les capteurs d'accélération (7) étant répartis à des intervalles d'1 dm à 15 m et de préférence de 2 dm à 10 m le long de la bande de support (11).

9. Dispositif capteur (30) selon l'une des revendications 6 à 8, les capteurs d'accélération (7) pouvant être synchronisés par un signal de déclenchement transmissible par l'unité de détection de signaux (14) via une ou plusieurs des lignes de transmission de signaux (10).

10. Dispositif capteur (30) selon l'une des revendications 6 à 9, les lignes de transmission de signaux (10) étant des lignes de bus auxquelles plusieurs ou tous les capteurs d'accélération (7) sont raccordés via les microprocesseurs (9).

11. Dispositif capteur (30) selon l'une des revendications 6 à 10, les lignes de transmission de signaux (10) s'étendant au moins dans des zones (21) réparties le long de la bande de support (11), dans des ondes transversales (22) orientées le long du plan d'extension principal de la bande de support (11).

12. Dispositif capteur (30) selon l'une des revendications 6 à 11, **dans lequel** la bande de support (11) entoure de manière étanche les capteurs d'accélération (7), les microprocesseurs (9) et les lignes de transmission de signaux (10).

13. Dispositif capteur (30) selon l'une des revendications 6 à 12, **dans lequel** les lignes de transmission de signaux (10) sont raccordées à l'unité de détection de signaux (14) via le connecteur et **dans lequel**
l'unité de détection de signaux (14) est un micro-ordinateur destiné à évaluer les signaux d'accélération transmis via les lignes de transmission de signaux (10).

14. Dispositif capteur (30) selon la revendication 13,
**dans lequel** l'unité de détection de signaux (14) présente un accumulateur d'énergie et/ou un générateur d'alimentation électrique et
dans lequel l'unité de détection de signaux (14) présente une interface pour la transmission sans fil des résultats de l'évaluation.

15. Éolienne avec un dispositif capteur (30) selon l'une des revendications 6 à 14, **dans laquelle,** sur chaque pale de rotor (1) de l'éolienne, la bande de support (11) ou une bande de support identique est collée sur la surface de la pale de rotor (1) s'étendant dans la direction d'extension principale (2) de telle sorte que la couche de protection (19) recouvre les capteurs d'accélération (7), les microprocesseurs (9) et les lignes de transmission de signaux (10) vers l'extérieur.
